# EUROPÄISCHE PATENTSCHRIFT

(11) **EP 0 666 204 B1**
(45) Veröffentlichungstag und Bekanntmachung des Hinweises auf die Patenterteilung: **05.11.1997**
(21) Anmeldenummer: 95100317.7
(22) Anmeldetag: 11.01.1995
(51) Int. Cl.: B60R 22/34, B60R 22/36

(54) **Aufrollautomat für einen Sicherheitsgurt**
Retractor for a safety belt
Enrouleur pour une ceinture de sécurité

(30) Priorität: 07.02.1994 DE 4403764
(43) Veröffentlichungstag der Anmeldung: 09.08.1995
(73) Patentinhaber: HS Technik und Design Technische Entwicklungen GmbH, 82234 Wessling (DE)
(72) Erfinder: Specht, Martin, D-82340 Feldafing (DE)
(74) Vertreter: Nöth, Heinz, Dipl.-Phys.

(56) Entgegenhaltungen:
- DE-A- 3 940 374
- PATENT ABSTRACTS OF JAPAN vol. 017 no. 083 (M-1369) ,18.Februar 1993 & JP-A-04 283150 (TAKATA KK) 8.Oktober 1992,

## Beschreibung

Die Erfindung betrifft einen Aufrollautomaten für einen Sicherheitsgurt nach dem Oberbegriff des Patentanspruches 1.

Ein derartiger Aufrollautomat ist aus der DE 39 40 374 A1 bekannt. Dieser Aufrollautomat besitzt eine Lagereinrichtung, die aus zwei durch Steckverbindungen miteinander verbundene Lagerschalen gebildet wird, die an den beiden Wickelwellenseiten angeordnet sind. Die Lagerschale an der einen Wickelwellenseite nimmt eine Triebfeder, unter deren Einfluß die Wickelwelle für den auf- und abzuwickelnden Sicherheitsgurt drehbar ist, auf. Die Lagerschale an der anderen Wickelseite nimmt eine Sensoreinrichtung, welche in bekannter Weise fahrzeugsensitiv und gurtbandsensitiv ist, auf. Ferner ist die Wickelwelle an ihren beiden Seiten in leichtgängigen Lagern, z.B. Spitzenlagern, in den Lagerschalen gelagert. Die Wickelwelle besitzt an beiden Wickelwellenseiten Blockierverzahnungen, die im Blockierfall in entsprechende Blockierverzahnungen am Rahmen eingreifen, wobei die Lagereinrichtung mit der darin angeordneten gegen weitere Drehung vorblockierten Wickelwelle am Rahmen geschwenkt wird.

Aufgabe der Erfindung ist es, einen Aufrollautomaten der eingangs genannten Art zu schaffen, bei dem eine problemlose Schwenklagerung der Lagereinrichtung erreicht wird.

Diese Aufgabe wird erfindungsgemäß durch die kennzeichnenden Merkmale des Patentanspruches 1 gelöst.

Dadurch, daß die Lagereinrichtung auf außen liegenden Lagerkanten der der freien Enden beiden Rahmenschenkel abgestützt ist, wird eine einfache Montage der Lagereinrichtung, in welcher die wesentlichen Automatenteile, nämlich die Wickelwelle, die Sensoreinrichtung und die Triebfeder untergebracht sind, am Rahmen gewährleistet. In vorteilhafter Weise können die Lagerkanten und die Steckverbindung, an welcher die Lagereinrichtung in den Lagerkanten aufliegt, durch eine Abdeckung, welche am Rahmen befestigt ist, abgedeckt und gegen Herausfallen aus den Lagerkanten geschützt sein. In vorteilhafter Weise können die Lagerkanten als Hohlkehlen ausgebildet sein, in denen die Steckverbindung der Lagereinrichtung im Bereich ihrer Auflageflächen, welche eine runde Kontur aufweisen, gleiten können.

In bevorzugter Weise besitzen die Lagerkanten ein elliptisches Hohlprofil. Die Auflageflächen der Steckverbindung, welche mit den Lagerkanten in Berührung kommen, können ebenfalls eine elliptische Form mit etwas stärkerer Krümmung aufweisen, damit die Gleitfähigkeit auf den Lagerkanten erreicht wird. Man erzielt hierdurch unter Vermeidung eines Aufeinandertreffens von Spitze und Spitze der Blockierverzahnungen an der Wickelwelle und den Rahmenschenkeln einen einwandfreien Blockiereingriff.

Dadurch, daß im Blockierfall der Eingriff der Blockierverzahnungen an den beiden Rahmenschenkeln bezüglich der Wellenachse innen erfolgt und die Schwenklagerung der Lagereinrichtung in bezüglich der Wellenachse außen liegenden Lagerkanten an den beiden Lagerschenkeln abgestützt ist, wird die Gefahr des Trennens des Blockiereingriffes der beiden Blockierverzahnungen wirkungsvoll infolge einer Rollbewegung der unter Gurtbandzug stehenden Wickelwelle verhindert.

Dieses Auftrennen der Blockierverzahnungen kann durch eine weitere Maßnahme verhindert werden. Diese besteht darin, daß zwischen den freien Enden der beiden Rahmenschenkel und einem Rahmenteil, der beispielsweise durch Verschrauben mit dem Fahrzeugaufbau verbunden ist, eine Zugverbindung, welche gleichzeitig als Abdeckung für die Wickelwelle in Form eines Abdeckbleches ausgebildet sein kann, vorgesehen ist. Diese Zugverbindung nimmt Zugkräfte auf, die zwischen den in etwa vom am Fahrzeugaufbau befestigten Rahmenteil rechtwinklig abstehenden Rahmenschenkeln und den am Fahrzeugaufbau befestigten Rahmenteil auftreten, auf. Wenn diese Zugkräfte beim Blockiereingriff der Wickelwelle so hoch sind, daß sie das abdeckende Verbindungsblech verformen, drückt dieses Verbindungsblech die Wickelwelle zusätzlich in die Blockierverzahnungen an den beiden Rahmenschenkeln. Auf diese Weise wird gewährleistet, daß auch bei extrem hohen, auf das Zugband wirkenden Zugkräften eine einwandfreie Blockierung der Wickelwelle beibehalten wird.

In bevorzugter Weise können die ineinander gesteckten Verbindungsteile der Steckverbindung konische Berührungsflächen aufweisen. Die konischen Berührungsflächen haben eine bevorzugt flache Steigung. Ferner können sie plastisch verformbar sein. Auf diese Weise erreicht man unabhängig von Toleranzen ein prozeßsicheres Ineinanderfügen der Steckverbindung zur Bildung der Lagereinrichtung für die Wickelwelle, die Sensoreinrichtung und die Triebfeder. Man erreicht auf diese Weise eine einfache Montage des Hubrollenautomaten.

Durch die Konizität der aufeinander liegenden Berührungsflächen der Verbindungsteile der Steckverbindung läßt sich eine Vorspannung erzielen, mit der die beiden Verbindungsteile übereinander geschoben sind. Aufgrund der flachen Steigung der Konusflächen läßt sich diese Vorspannung innerhalb eines relativ großen Verschiebungsbereiches der beiden Verbindungsteile gegeneinander erreichen. Damit kann ein bestimmter Abstand zwischen den beiden Lagerschalen unter dieser Vorspannung eingestellt werden, wobei der Abstand der Lagerschalen so eingestellt ist, daß ein optimales Axialspiel der Wickelwelle in ihren Lagerstellen an den Lagerschalen erreicht wird. Dieses optimale Lagerspiel beträgt etwa 0,1 bis 0,2 mm. Durch dieses optimal eingestellte Lagerspiel erreicht man eine gute Leichtgängigkeit der Wickellager in den Lagerschalen. Dies führt zu einer reibungsarmen komfortablen und geräuscharmen Lagerung der Wickelwelle. Die Vorspannung, mit welcher die beiden Lagerschalen, über die bevorzugt drei Steckverbindungen miteinander verbunden sind, wird durch einen vorzugsweise auf einen der beiden Steckteile aufgeschweißten Anschlag aufrecht erhalten. Die Konizität der aneinander liegenden Flächen der Steckteile der Steckverbindung beträgt etwa 0,5 bis 1,0°.

Anhand eines Ausführungsbeispiels wird die Erfindung noch weiter erläutert. Es zeigt:
- Fig. 1:: die Bauteile des Ausführungsbeispiels in Explosivdarstellung;
- Fig. 2:: schematisch eine weitere Ausführungsform für den Zusammenbau einer Lagereinrichtung;
- Fig. 3 (A)-(C):: verschiedene Zustände bei auf die Wickelwelle einwirkenden hohen Zugkräften; und
- Fig. 4:: einen Schnitt durch einen Auflagebereich, in welchem die Lagereinrichtung am Rahmen aufliegt.

Der dargestellte Hubrollenautomat besitzt eine Wikkelwelle 1 für einen Sicherheitsgurt. Die Wickelwelle 1 ist an ihren beiden Seiten in leichtgängigen Lagern, die beispielsweise als Spitzenlager oder Feinlager ausgebildet sein können und durch Lagerelemente 21, 22 an der Wickelwelle und an Lagerschalen 23, 24 gebildet sind, gelagert. Die Lagerschalen sind mittels Steckverbindungen 9, welche beim dargestellten Ausführungsbeispiel als Stifte ausgebildet sind, zu einer Baueinheit bzw. Lagereinrichtung 8 zusammengefügt. An der einen Wickelseite nimmt die Lagerschale 23 eine Sensoreinrichtung, von der der fahrzeugsensitive Sensor 16 gezeigt ist, auf. Ein innerer Zahnkranz 25 an der Lagerschale 23 kann mit einer gurtsensitiven, an der Wickelwelle 1 gelagerten Sensoreinrichtung 29 zusammenwirken. Die wickelwelle 1 wird im Crashfall durch den fahrzeugsensitiven Sensor 16 und/oder den gurtbandsensitiven Sensor 29 drehfest mit der Lagerschale 23 bzw. der Lagereinrichtung 8 gekuppelt.

Die Lagerschale 24 an der anderen Wickelwellenseite nimmt eine Triebfeder 2 auf, die mit ihrem äußeren Ende an der Lagerschale 24 abgestützt ist und mit ihrem inneren Ende am Lagerelement 21 der Wickelwelle 1 angreift. Unter dem Einfluß der Triebfeder 2 wird der nicht näher dargestellte Sicherheitsgurt auf die Wickelwelle 1 auf- und abgewickelt, wobei sich die Wickelwelle 1 um die Wellenachse 3 dreht.

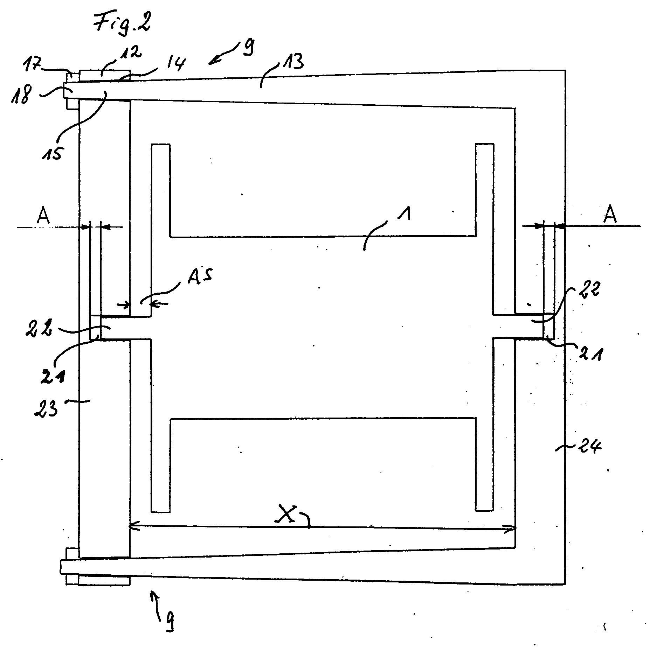

Beim Zusammenfügen der beiden Steckteile 12 und 13 werden die Verbindungsteile 14, 15, welche beim dargestellten Ausführungsbeispiel als durchgehende Bohrung (in Fig. 2) mit konischer Innenwand und entsprechend konisch geformtem Einsetzteil ausgebildet sind, ineinander geschoben. Dabei kommen die Innenwand der Bohrung und die äußere konische Fläche des Einsetzteils miteinander in Berührung. Dieses Inberührungkommen erfolgt dann, wenn die beiden Lagerschalen 23 und 24 einen etwas größeren Abstand voneinander aufweisen als der Nennabstand X (Fig. 2). Die beiden Verbindungsteile 14, 15 (durchgehende Bohrung und konisch zulaufendes Einsetzteil) können dann in Kontakt miteinander kommen, wenn der Abstand der beiden Lagerschalen 23 und 24 etwa X + 2 mm beträgt. Bei dem weiteren Zusammenschieben der Steckteile 12 und 13 wird aufgrund der Konizität der Verbindungsteile 14 und 15 eine Vorspannung erzeugt. Diese Vorspannung wächst mit weiterem Zusammenschieben der beiden Steckteile 12 und 13, d.h. bei der Verringerung des Abstandes zwischen den beiden Lagerschalen 26 und 27. Das weitere Zusammenschieben der Teile erfolgt so lange bis ein optimales Axialspiel AS der Wickelwelle 1 an ihren Lagerstellen in den Lagerschalen von etwa 0,1 bis 0,2 mm erreicht ist. Damit ist dann auch der Nennabstand zwischen den beiden Lagerschalen 23 und 24 erreicht. Um den damit erreichten optimalen Abstand zwischen den beiden Lagerschalen 23 und 24 aufrecht zu erhalten, wird auf ein über die durchgehende Bohrung (Verbindungsteil 14) hinausragendes freies Endstück 18 des Steckteiles 13 ein Anschlag 17, beispielsweise durch Schweißen, insbesondere Ultraschallschweißen, befestigt. Damit ist gewährleistet, daß der optimale Abstand zwischen den Lagerschalen 23 und 24, welcher das gewünschte Axialspiel gewährleistet, beibehalten wird. In bevorzugter Weise sind drei Steckverbindungen 9 vorgesehen, um über den gesamten Umfang der Wickelwelle 1 hin diesen optimalen Abstand aufrecht zu erhalten. Die Konizität der ineinander geschobenen verbindungsteile 14 und 15 ist äußerst flach und beträgt z.B. 0,5 bis 1,0°.

Hierdurch erreicht man eine Überbrückung der Kette aller Toleranzen, die sich bei der Herstellung der Wickelwelle 1, der Lagerschalen 23, 24, der Lagerelemente 21, 22, der Steckverbindungsteile 12 und 13 ergeben. Die Montage wird erleichtert, und man erreicht eine genaue Einstellung des gewünschten Axialspiels in den Lagerstellen der Wickelwelle 1.

Die aus den beiden Lagerschalen 23, 24 über die Steckverbindungen 9 zusammengesetzte Lagereinrichtung 8 ist an einem Rahmen 6 schwenkbar gelagert. Die schwenkbare Lagerung erfolgt an Lagerkanten 10, die an Rahmenschenkeln 7 des Rahmens 6 vorgesehen sind. Die Lagerkanten 10 liegen bezüglich der Wellenachse 3 außen an den beiden Rahmenschenkeln 7. Die bevorzugt mit elliptischem Profil ausgebildeten Lagerkanten 10 befinden sich in unmittelbarer Nähe von freien Enden 26, 27 von Rahmenschenkelteilen, die in Form zweier Kragarme etwa rechtwinklig vom Rahmen abstehen. Der übrige Teil des Rahmens 6 wird gebildet von einem Rahmenteil 28, in dessen Bereich der Rahmen 6 am Fahrzeugaufbau mit Hilfe einer Schraubverbindung befestigt wird und etwa in Bandlaufrichtung verlaufenden Rahmenschenkelteilen, die in die beiden in rechten Winkel abstehenden Kragarme der Rahmenschenkel übergehen.

Die Wickelwelle besitzt an ihren beiden Seiten Blokkierverzahnungen 4. Entsprechende Blockierverzahnungen 5 sind an den beiden Rahmenschenkeln 7 bezüglich der Wellenachse innenliegend angeordnet.

Im Blockierfall wird die durch die Sensoreinrichtung an der Lagereinrichtung 8 vorblockierte Wickelwelle aufgrund der Schwenklagerung der Lagereinrichtung 8 an den Lagerkanten 10 mit ihren Blockierverzahnungen 4 in Blockiereingriff mit den Blockierverzahnungen 5 an den Rahmenschenkeln 7 gebracht. In diesem Blockiereingriff werden die vom Gurtband ausgeübten Kräfte in den stabilen Rahmen 6, der am Fahrzeugchassis beispielsweise im Bereich der B-Säule, am Rahmenteil 28 befestigt ist, eingeleitet.

Da der Blockiereingriff zwischen den Blockierverzahnungen 4 und 5 an innen liegenden Kanten der Rahmenschenkel 7 stattfindet und die Schwenklagerung der an der Lagereinrichtung 8 abgestützten Wickelwelle 1 an nach außen weisenden Lagerkanten 10 der beiden Rahmenschenkel 7 abgestützt ist, wird ein Ausrollen der blockierten Wickelwelle 1 aus dem Blockiereingriff mit den rahmenseitigen Blockierverzahnungen 5 vermieden. Im Crashfall bleibt daher der Blockiereingriff und damit die einwandfreie Sperre der Wickelwelle und die Krafteinleitung in den Rahmen 6 gewährleistet.

Ferner wird durch die insbesondere muldenförmig bzw. hohlkehlig ausgebildeten Lagerkanten 10 ein einfaches Einlagern der stiftförmig ausgebildeten Steckverbindungen 9 gewährleistet. Die in die Lagerkanten 10 eingelagerte Steckverbindung 9 wird durch eine am Rahmen befestigte Abdeckung 11 übergriffen, so daß die Steckverbindung 9 und die daran befindliche Lagereinrichtung 8 lagesicher nach Art einer Schaukel an den Lagerkanten 10 schwenkbar gelagert ist. In ihren Auflagebereichen 19 sind die aus z.B. stiftförmigen Steckteilen 12 und 13 gebildete Steckverbindung 9 rund ausgebildet, um eine möglichst reibungsfreie Schwenklagerung zu erreichen.

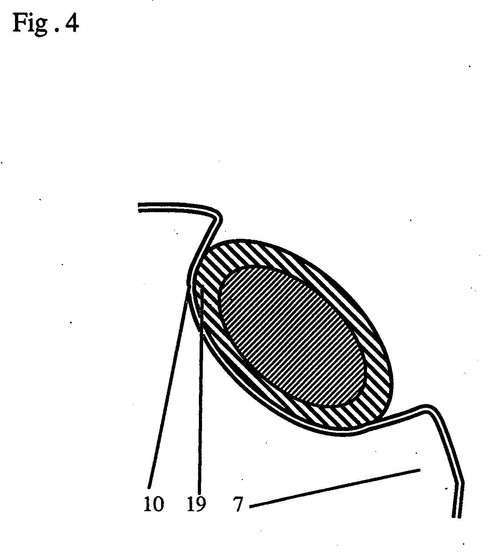

Bevorzugt besitzen die Lagerkanten 10 ein elliptisches Profil(Fig. 4). Auch die Auflagebereiche 19 der Steckteile 12 und 13 können eine elliptische Kontur aufweisen, wobei die Krümmung der Auflagebereiche 19 stärker ist als die der Lagerkanten 10, um eine einwandfreie Verschiebbarkeit der Steckverbindung 9 auf den Lagerkanten 10 zu gewährleisten.

Zur Erzielung einer von der Kreisform abweichenden Kontur auch im Bereich der Verbindungsteile 14 und 15 (Bohrung und Einsteckteil) können auch diese Teile eine aneinander angepaßte Außenkontur haben, wobei sich die elliptische Form über die gesamte Steckverbindung hin erstrecken kann. Hierdurch wird ein verwindungsfreies Ineinanderschieben der Steckteile 12 und 13 erreicht. Die mechanische Stabilität, insbesondere die Verwindungsfreiheit der Steckverbindungen 9 zwischen den beiden Lagerschalen 23 und 24 wird dadurch erhöht.

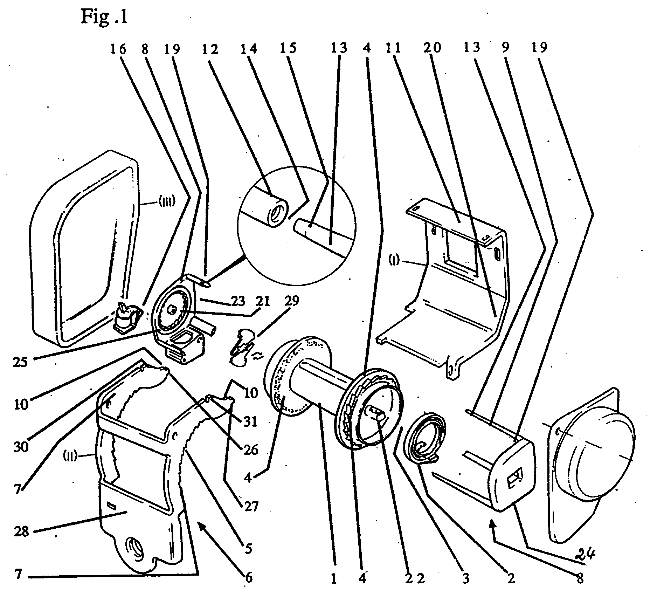

Die steckteile 12 und 13 der Steckverbindung können auch die aus der Detailzeichnung in Fig. 1 ersichtliche Ausbildung der konisch aneinander angepaßte Flächen haben. Das stiftförmige Steckteil 13 besitzt an seinem vorderen Ende ein konisch zulaufendes Einsetzteil 15, das in eine geschlossene Bohrung mit entsprechend geformter konischer Innenwand des Steckteils 12 einsetzbar ist. Das konisch zulaufende Einsetzteil 15 und die innen konisch geformte Bohrung 14 bilden Verbindungsteile der Steckverbindung. Aufgrund der insbesondere mit flacher Steigung verlaufenden Konizität der beiden Steckteile 14 und 15 erreicht man unabhängig von Herstellungstoleranzen ein prozeßsicheres Ineinanderfügen der beiden Stifte 12 und 13 der Steckverbindung 9. Dabei können sich im Bereich der ineinandergefügten Verbindungsteile plastische Verformungen ergeben. Nach dem Zusammenfügen werden die ineinandergesteckten Teile verschweißt. Hierbei wird insbsondere Ultraschallschweißen zur Anwendung gebracht.

Wie aus Fig. 1 zu ersehen ist, können noch zusätzliche Steckverbindungen (beispielsweise insgesamt 3 Steckverbindungen) vorgesehen sein, um die beiden Lagerschalen 23 und 24 und die dazwischen angeordneten Teile der Sensoreinrichtung der Wickelwelle und der Triebfeder zu einer Baueinheit zu verbinden. Diese Baueinheit bzw. Lagereinrichtung 8 ist, wie schon erläutert, schwenkbar am Rahmen 6 gelagert.

Wenn bei einer erhöhten Fahrzeuggschwindigkeitsänderung bzw. erhöhtem Gurtbandauszug die Sensoreinrichtung anspricht, wird die Wickelwelle 1 mit der Lagereinrichtung in bekannter Weise, beispielsweise mittels Klinkeneingriff drehfest gekoppelt. Ein auf die so vorblockierte Wickelwelle 1 einwirkender Gurtbandzug verschwenkt die Lagereinrichtung. Dieser Schwenkwinkel von der Normalposition, in welcher die Wickelwelle frei drehbar ist und das Gurtband unter dem Einfluß der Triebfeder 2 auf- und abgewickelt werden kann, bis zur Blockierstellung, in welcher die Blockierverzahnungen 4 und 5 miteinander in Eingriff kommen, kann etwa 3° betragen.

Die Blockierverzahnungen 4 an der Wickelwelle können jeweils 36 Zähne aufweisen. Es ergibt sich hieraus ein Einsteuerwinkel von 10° für die Bewegung der Blockierverzahnungen 4 an der Wickelwelle in die rahmenfesten Blockierverzahnungen 5 am Rahmen 6. Auch für den Klinkeneingriff der vom Fahrzeugsensor 16 betätigten Klinke 26 zur Kopplung bzw. Vorblockierung der Wickelwelle 1 an der Lagereinrichtung 8 stehen 36 Zähne an der Wickelwelle zur Verfügung. Es kann sich hierbei um die Blockierverzahnung an der Sensorseite der Wickelwelle handeln. Es kann jedoch auch ein zusätzlicher Zahnkranz an der Wickelwelle 1 für den Sensorklinkeneingriff vorgesehen sein.

Die Anordnung der Lagerkanten 10 und der Blockierverzahnungen 5 an den Rahmenschenkeln 7 im Hinblick auf den Einsteuerwinkel ist so bemessen, daß mindestens vier Blockierzähne der Wickelwelle mit entsprechenden Blockierzähnen am Rahmen unter Vermeidung des Ausrollens in Blockiereingriff kommen. In Verbindung mit der hohlkehlig ausgebildeten Lagerung der Lagerkanten 10, an denen die Lagereinrichtung 8 verschiebbar gelagert ist, erreicht man einen sicheren Blockiereingriff der Blockierzähne der Blockierverzahnung 4 und 5 an der Wickelwelle 1 und den Rahmenschenkeln 7. Das Aufeinandertreffen von Spitze - Spitze der Verzahnungen 4 und 5 ist minimiert.

Die Verschiebbarkeit der Lagereinrichtung 8 in den Lagerkanten 10 sowie der Abstand (Winkelabstand) der Zähne der Blockierverzahnungen 4 und 5 läßt sich so einstellen, daß bei vorblockierter Wickelwelle 1 die Zähne der Blockierverzahnungen 4 und 5 beim Verschwenken der Lagereinrichtung 8 immer ineinander greifen, wobei aufgrund der Verschiebbarkeit der Lagerung ferner gewährleistet ist, daß diese Zähne durch den auf die vorblockierte Wickelwelle 1 wirkenden Bandzug in einen optimalen Blockiereingriff miteinander gebracht werden.

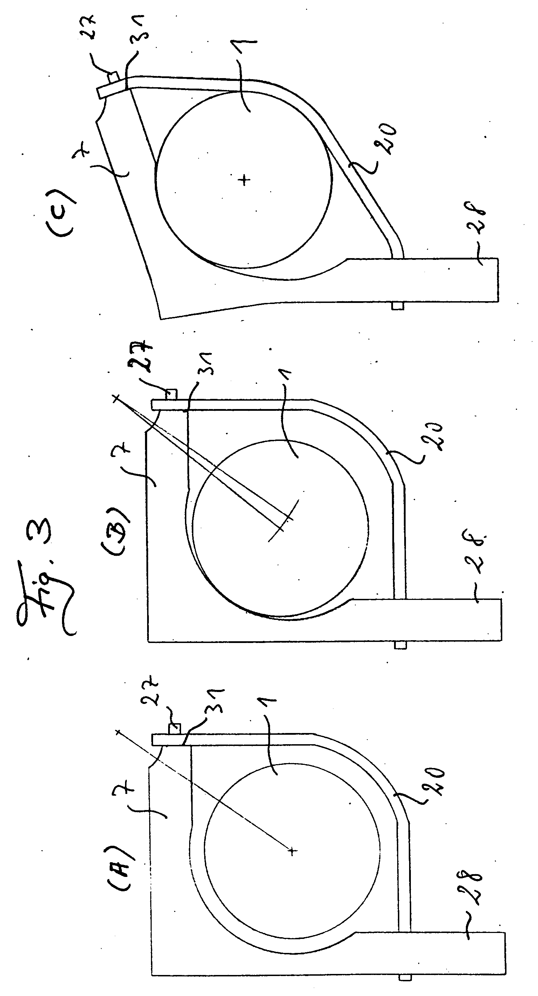

Die Abdeckung 11 für die Abdeckung der Lagerung an den Lagerkanten 10 kann aus einem Stück gebildet sein mit einem Abdeckblech, welches eine Zugkraft aufnehmende Verbindung 20 zwischen den vorderen Enden 26 und 27 der beiden Rahmenschenkel 7 und dem Rahmenteil 28 bildet. Die als Abdeckblech ausgebildete Verbindung 20 ist einerseits zugfest am Rahmenteil 28 und andererseits zugfest an Befestigungsstellen 30, 31 im Bereich der vorderen Enden der Rahmenschenkel 7 am Rahmen 6 befestigt (Fig. 3A). Wenn beim Blockiereingriff der Blockierzähne 4 und 5 (Fig. 3B) vom Gurtband hohe Zugkräfte auf die Wickelwelle ausgeübt werden, die u.U. zu einer Verformung der Verbindung 20 führen, ist die Verformung in Richtung auf die Wellenachse 3 gerichtet (Fig. 3C), so daß die Wickelwelle 1 so verschoben wird, daß die Blockierverzahnungen 4 und 5 in Eingriff miteinander bleiben.

## Patentansprüche

1. Aufrollautomat für einen Sicherheitsgurt mit einer um eine Wellenachse drehbaren unter dem Einfluß einer Triebfeder stehenden Wickelwelle für den auf- und abwickelbaren Sicherheitsgurt, Blockierverzahnungen an beiden Wickelwellenseiten, die im Blockierfall in entsprechende Blokkierverzahnungen, welche an bezüglich der Wellenachse innenliegenden Bereichen von Rahmenschenkeln eines Rahmens vorgesehen sind, gegen die Kraft einer Rückstellfeder eingreifen, und einer Lagereinrichtung, die aus zwei durch wenigstens eine Steckverbindung miteinander verbundenen Lagerschalen gebildet ist, die an der einen Wellenseite die Triebfeder und an der anderen Wellenseite eine Sensoreinrichtung aufnehmen, wobei die Wickelwelle an ihren beiden Seiten in leichtgängigen Lagern in den Lagerschalen gelagert ist und wobei die Lagereinrichtung mittels der Steckverbindung am Rahmen schwenkbar gelagert ist,
dadurch **gekennzeichnet,**
daß die Lagereinrichtung (8) auf außen liegenden Lagerkanten (10) der freien Enden der beiden Rahmenschenkel (7) abgestützt ist.

2. Aufrollautomat nach Anspruch 1, dadurch gekennzeichnet, daß die Lagerkanten (10) und die daran gestützte Steckverbindung (9) der Lagereinrichtung (8) durch eine am Rahmen (6) befestigte Abdeckung (11) abgedeckt sind.

3. Aufrollautomat nach Anspruch 1 oder 2, dadurch gekennzeichnet, daß die jeweilige Steckverbindung (9) aus ineinander gesteckten Steckteilen (12, 13) besteht, wobei zumindest aneinander liegende Verbindungsteile (14, 15) der Steckteile (12, 13) konische Berührungsflächen aufweisen.

4. Aufrollautomat nach einem der Ansprüche 1 bis 3, dadurch gekennzeichnet, daß ineinander gesteckte Verbindungsteile (14, 15) gebildet sind durch eine Bohrung mit konischer Innenwand und ein konisch zulaufendes Einsetzteil.

5. Aufrollautomat nach einem der Ansprüche 1 bis 4, dadurch gekennzeichnet, daß die Verbindungsteile (14, 15) durch Schweißen miteinander verbunden sind.

6. Aufrollautomat nach einem der Ansprüche 1 bis 5, dadurch gekennzeichnet, daß die Verbindungsteile (14, 15) mit einer durch ihre Konizität bedingten Vorspannung übereinander geschoben sind und daß die beiden Verbindungsteile durch einen Anschlag (17) gegen eine Trennung in Richtung der Vorspannung gesichert sind.

7. Aufrollautomat nach einem der Ansprüche 1 bis 6, dadurch gekennzeichnet, daß das eine Verbindungsteil (14) als durchgehende Bohrung und das andere Verbindungsteil (15) als durch die gesamte Bohrung ragendes Einsetzteil ausgebildet ist, welches mit einem freien Endstück (18) der Anschlag (17) vorgesehen ist.

8. Aufrollautomat nach einem der Ansprüche 1 bis 7, dadurch gekennzeichnet, daß durch die mit Vorspannung übereinander geschobenen Verbindungsteile (14, 15) der axiale Abstand der beiden Lagerschalen (23, 24) auf ein für die Leichtgängigkeit der Wickelwelle (1) optimales axiales Lagerspiel eingestellt ist.

9. Aufrollautomal nach einem der Ansprüche 1 bis 8, dadurch gekennzeichnet, daß die Steckteile (12, 13) zumindest im Bereich ihrer Verbindungsteile (14, 15) einen von der Kreisform abweichenden Querschnitt aufweisen.

10. Aufrollautomat nach einem der Ansprüche 1 bis 9, dadurch gekennzeichnet, daß die Lagerkanten (10) ein Hohlprofil haben und die Steckverbindung (9) in ihren Auflagebereichen (19) an den Lagerkanten (10) gleitfähig aufliegt.

11. Aufrollautomat nach einem der Ansprüche 1 bis 10, dadurch gekennzeichnet, daß die Lagerkanten (10) ein elliptisches Hohlprofil haben.

12. Aufrollautomat nach einem der Ansprüche 1 bis 11, dadurch gekennzeichnet, daß die Steckverbindung (9) zumindest in ihren Auflagebereichen (19) auf den Lagerkanten (10) einen elliptischen Querschnitt aufweist.

13. Aufrollautomat nach einem der Ansprüche 1 bis 12, dadurch gekennzeichnet, daß zwischen den freien Enden (26, 27) der beiden Rahmenschenkel (7) und einem Rahmenteil (28), das mit dem Fahrzeugaufbau verbunden wird, eine Zugkraft aufnehmende Verbindung (20) vorgesehen ist.

14. Aufrollautomat nach Anspruch 13, dadurch gekennzeichnet, daß bei einer durch Zugkraft verursachten Verformung der Verbindung (20) die Wickelwelle (1) in die Blockierverzahnungen (5) der Rahmenschenkel (7) gedrückt ist.

15. Aufrollautomat nach Anspruch 13 oder 14, dadurch gekennzeichnet, daß die Zugkraft aufnehmende Verbindung (20) als Abdeckblech und aus einem Stück mit der Abdeckung (11) der Lagerkanten (10) ausgebildet ist.

16. Aufrollautomat nach einem der Ansprüche 1 bis 15, dadurch gekennzeichnet, daß die Wickelwelle mittels der Sensoreinrichtung (16) mit der Lagereinrichtung (8) drehfest kuppelbar ist und durch Gurtbandzug mit einem Schwenkwinkel von etwa 3° für den Eingriff der Blockierverzahnungen (4, 5) verschwenkbar ist.

17. Aufrollautomat nach einem der Ansprüche 1 bis 16, dadurch gekennzeichnet, daß die jeweilige Blockierverzahnung (4) an der Wickelwelle (1) 36 Zähne aufweist.

## Claims

1. An automatic retractor for a safety belt comprising a winding shaft for the safety belt which can be wound up and unwound, the winding shaft being rotatable about a winding axis and being under the influence of a drive spring, blocking tooth configurations at both sides of the winding shaft, which in the blocking situation engage against the force of a return spring into corresponding blocking tooth configurations which are provided on regions of frame limbs of a frame, said regions being disposed inwardly with respect to the winding axis, and a bearing means which is formed from two bearing casing portions which are connected together by at least one plug connection and which receive the drive spring at one side of the shaft and a sensor means at the other side of the shaft, wherein the winding shaft is mounted at the two sides thereof in easily movable bearings in the bearing casing portions and wherein the bearing means is mounted pivotably on the frame by means of the plug connection, characterised in that the bearing means (8) is supported on outwardly disposed bearing edges (10) of the free ends of the two frame limbs (7).

2. An automatic retractor according to claim 1 characterised in that the bearing edges (10) and the plug connection (9), supported thereon, of the bearing means (8) are covered by a cover means (11) secured to the frame (6).

3. An automatic retractor according to claim 1 or claim 2 characterised in that the respective plug connection (9) comprises plug portions (12, 13) which are fitted one into the other, wherein at least connecting portions (14, 15), which are in contact with each other, of the plug portions (12, 13), have conical contact surfaces.

4. An automatic retractor according to one of claims 1 to 3 characterised in that connecting portions (14, 15) which are fitted one into the other are formed by a bore with a conical inside surface and a conically convergent insertion portion.

5. An automatic retractor according to one of claims 1 to 4 characterised in that the connecting portions (14, 15) are connected together by welding.

6. An automatic retractor according to one of claims 1 to 5 characterised in that the connecting portions (14, 15) are pushed one over the other with a prestressing governed by the conicity thereof and that the two connecting portions are prevented from separation in the direction of the prestressing by an abutment (17).

7. An automatic retractor according to one of claims 1 to 6 characterised in that the one connecting portion (14) is in the form of a through bore and the other connecting portion (15) is in the form of an insertion portion which projects through the entire bore and which is provided with a free end portion (18) for the abutment (17).

8. An automatic retractor according to one of claims 1 to 7 characterised in that the axial spacing of the two bearing casing portions (23, 24) is set to an axial bearing play which is the optimum for easy motion of the winding shaft (1), by the connecting portions (14, 15) which are fitted one over the other in a prestressed condition.

9. An automatic retractor according to one of claims 1 to 8 characterised in that the plug portions (12, 13) at least in the region of their connecting portions (14, 15) are of a cross-section which differs from a circular shape.

10. An automatic retractor according to one of claims 1 to 9 characterized in that the bearing edges (10) are of a hollow profile and the plug connection (9) lies in the support regions (19) thereof slidably on the bearing edges (10).

11. An automatic retractor according to one of claims 1 to 10 characterized in that the bearing edges (10) are of an elliptical hollow profile.

12. An automatic retractor according to one of claims 1 to 11 characterized in that at least in its support regions (19) on the bearing edges (10) the plug connection (9) is of an elliptical cross-section.

13. An automatic retractor according to one of claims 1 to 12 characterized in that a connection (20) for carrying tensile force is provided between the free ends (26, 27) of the two frame limbs (7) and a frame portion (28) which is connected to the vehicle structure.

14. An automatic retractor according to claim 13 characterised in that in the event of deformation of the connection (20) caused by tensile force the winding shaft (1) is urged into the blocking tooth configurations (5) of the frame limbs (7).

15. An automatic retractor according to claim 13 or claim 14 characterised in that the connection (20) for carrying tensile force is in the form of a cover plate and is made in one piece with the cover means (11) of the bearing edges (10).

16. An automatic retractor according to one of claims 1 to 15 characterised in that the winding shaft can be non-rotatably coupled to the bearing means (8) by way of the sensor means (16) and is pivotable by a belt webbing pull with a pivot angle of about 3° for engagement of the blocking tooth configurations (4, 5).

17. An automatic retractor according to one of claims 1 to 16 characterised in that the respective blocking tooth configuration (4) on the winding shaft (1) has 36 teeth.

## Revendications

1. Rétracteur pour une ceinture de sécurité, avec un enrouleur pour la ceinture de sécurité enroulable et déroulable, qui peut tourner autour d'un axe et est soumis à l'effet d'un ressort-moteur, avec des dentures de blocage sur les deux côtés de l'enrouleur qui s'engagent en cas de blocage, contre la force d'un ressort de rappel, dans des dentures de blocage correspondantes prévues sur des zones internes, par rapport à l'axe de l'enrouleur, des branches d'un cadre, et avec un système de palier formé de deux coussinets, reliés au moins par un assemblage à emboîtement, et qui reçoivent le ressort-moteur sur un côté de l'enrouleur et un dispositif de détection sensible sur l'autre côté, l'enrouleur étant logé sur ses deux côtés dans les coussinets, dans des paliers libres, et le système de palier étant monté avec une possibilité de pivotement sur le cadre, au moyen de l'assemblage à emboîtement, caractérisé en ce que le système de palier (8) est supporté sur des rebords d'appui (10) externes des extrémités libres des deux branches (7) du cadre.

2. Rétracteur suivant la revendication 1, caractérisé en ce que les rebords d'appui (10) et l'assemblage à emboîtement (9), supporté sur ces derniers, du système de palier (8), sont fermés par un couvercle (11) fixé sur le cadre (6).

3. Rétracteur suivant l'une des revendications 1 et 2, caractérisé en ce que chaque assemblage à emboîtement (9) se compose d'éléments enfichables (12, 13) emmanchés l'un dans l'autre, les éléments de jonction (14, 15) au moins, s'appliquant l'un sur l'autre, et des éléments enfichables (12, 13) présentant des surfaces de contact coniques.

4. Rétracteur suivant l'une des revendications 1 à 3, caractérisé en ce que les éléments de jonction (14, 15), emmanchés l'un dans l'autre, sont formés par un trou muni d'une paroi interne conique et par un élément d'insertion se terminant en cône.

5. Rétracteur suivant l'une des revendications 1 à 4, caractérisé en ce que les éléments de jonction (14, 15) sont assemblés entre eux par soudage.

6. Rétracteur suivant l'une des revendications 1 à 5, caractérisé en ce que les éléments de jonction (14, 15) sont poussés l'un sur l'autre avec une précontrainte provoquée par leur conicité, et en ce qu'une butée (17) protège les deux éléments de jonction du risque de séparation, dans le sens de la précontrainte.

7. Rétracteur suivant l'une des revendications 1 à 6, caractérisé en ce que l'un des éléments de jonction (14) est réalisé sous forme de trou continu, l'autre élément de jonction (15) étant réalisé sous forme d'élément d'insertion qui pénètre au travers de la totalité du trou, et sur une extrémité libre (18) duquel est prévue la butée (17).

8. Rétracteur suivant l'une des revendications 1 à 7, caractérisé en ce que, par les éléments de jonction (14, 15) poussés l'un sur l'autre sous précontrainte, la distance axiale des deux coussinets de palier (23, 24) est réglée sur un jeu axial de palier optimal pour la souplesse de l'enrouleur (1).

9. Rétracteur suivant l'une des revendications 1 à 8, caractérisé en ce que les éléments enfichables (12, 13) présentent, dans la zone de leurs éléments de jonction (14, 15) au moins, une section transversale qui diffère de la forme circulaire.

10. Rétracteur suivant l'une des revendications 1 à 9, caractérisé en ce que les rebords d'appui (10) ont un profil creux, et en ce que l'assemblage à emboîtement (9) s'applique et peut glisser dans ses zones d'appui (19) sur les rebords d'appui (10).

11. Rétracteur suivant l'une des revendications 1 à 10, caractérisé en ce que les rebords d'appui (10) ont un profil creux elliptique.

12. Rétracteur suivant l'une des revendications 1 à 11, caractérisé en ce que l'assemblage à emboîtement (9) présente une section transversale elliptique, au moins dans ses zones d'appui (19) sur les rebords d'appui (10).

13. Rétracteur suivant l'une des revendications 1 à 12, caractérisé en ce qu'un assemblage (20), soumis à une force de traction, est prévu entre les extrémités libres (26, 27) des deux branches (7) du cadre et une partie de cadre (28), assemblée avec la carrosserie.

14. Rétracteur suivant la revendication 13, caractérisé en ce que, avec une déformation de l'assemblage (20) provoquée par une force de traction, l'enrouleur (1) est pressé dans les dentures de blocage (5) des branches (7) du cadre.

15. Rétracteur suivant l'une des revendications 13 et 14, caractérisé en ce que l'assemblage (20), soumis à la force de traction, est réalisé sous forme de tôle de couverture et se compose d'une seule pièce avec le couvercle (11) des rebords d'appui (10).

16. Rétracteur suivant l'une des revendications 1 à 15, caractérisé en ce que l'enrouleur peut être couplé sans possibilité de rotation au système de palier (8), au moyen du dispositif de détection sensible (16), et peut pivoter d'un angle de 3° environ, sous l'effet de la traction de la ceinture, pour l'entrée en prise des dentures de blocage (4, 5).

17. Rétracteur suivant l'une des revendications 1 à 16, caractérisé en ce que chaque denture de blocage (4), prévue sur l'enrouleur (1), présente 36 dents.
